# EUROPÄISCHE PATENTSCHRIFT

(11) **EP 0 790 910 B1**
(45) Veröffentlichungstag und Bekanntmachung des Hinweises auf die Patenterteilung: **20.05.1998**
(21) Anmeldenummer: 95936544.6
(22) Anmeldetag: 25.10.1995
(51) Int. Cl.: B60T 13/57

(54) **VENTILBAUGRUPPE**
VALVE ASSEMBLY
ENSEMBLE SOUPAPE

(30) Priorität: 07.11.1994 DE 9417819 U
(43) Veröffentlichungstag der Anmeldung: 27.08.1997
(73) Patentinhaber: LUCAS INDUSTRIES PUBLIC LIMITED COMPANY, Solihull, West Midlands B91 3TX (GB)
(72) Erfinder: KAUB, Manfred, D-56321 Rhens (DE)
(74) Vertreter: Beyer, Andreas, Dr.
(86) Internationale Anmeldenummer: EP9504179
(87) Internationale Veröffentlichungsnummer: WO9614230

(56) Entgegenhaltungen:
- EP-B- 0 405 603
- FR-A- 2 206 219
- US-A- 5 161 452

## Beschreibung

Die Erfindung betrifft eine Ventilbaugruppe mit den im Oberbegriff des Anspruchs 1 aufgeführten Merkmalen, die zum Steuern eines pneumatischen Bremskraftverstärkers eingesetzt wird.

Pneumatische Bremskraftverstärker haben im Normalfall zwei Kammern, eine Unterdruckkammer und eine Arbeitskammer, die mittels einer verschiebbaren Membran voneinander getrennt sind. Der Begriff "zwei Kammern" soll hierbei auch zwei Gruppen miteinander verbundener Kammern einschließen, wie sie bei Bremskraftverstärkern in Tandembauweise vorhanden sind.

Bei pneumatischen Bremskraftverstärkern mit Ventilbaugruppen der genannten Art ist die Unterdruckkammer ständig an eine Unterdruckquelle angeschlossen, beispielsweise an die Saugleitung eines Ottomotors, und die Arbeitskammer ist in einer Ruhestellung der Ventilbaugruppe mit der Unterdruckkammer verbunden und wird infolgedessen ebenfalls evakuiert. Beim Betätigen der Ventilbaugruppe wird diese in eine Betriebsstellung verschoben, in der die Arbeitskammer von der Unterdruckkammer getrennt und mit einem Lufteinlaß verbunden ist, so daß Umgebungsluft in die Arbeitskammer einströmen kann und der dort entstehene Druck die zwischen den beiden Kammern angeordnete bewegliche Wand verschiebt. Die die beiden Kammern voneinander trennende bewegliche Wand bewegt ihrerseits ein Kraftabgabeglied zum Betätigen eines mit dem Bremskraftverstärker verbundenen Hauptbremszylinders.

Es ist bekannt, der Arbeitskammer eines pneumatischen Bremskraftverstärkers Umgebungsluft nicht nur durch den genannten Lufteinlaß zuzuführen, sondern darüber hinaus einen zusätzlichen Belüftungskanal vorzusehen, über den der Arbeitskammer in bestimmten Situationen ebenfalls Luft zugeführt werden kann. Mittels eines solchen zusätzlichen Belüftungskanals, dessen Funktion üblicherweise durch ein zusätzliches Ventil gesteuert wird, kann beispielsweise ein schnelleres Ansprechen der Brems-anlage eines Fahrzeugs bei Notbremsungen erreicht werden. Es ist auch bekannt, den zusätzlichen Belüftungskanal zur Zufuhr von Druckluft zu benutzen, um das Verstärkungsverhältnis eines gegebenen pneumatischen Bremskraftverstärkers zu erhöhen. Bremskraftverstärker bzw. Ventilbaugruppen der zuvor beschriebenen Art sind beispielsweise aus der EP 0 368 691 A1, der FR 2,206,219 A1 und aus der DE 38 06 401 A1 bekannt. Eine gattungsgemäße Ventilbaugruppe ist in der EP 0 405 603 B1 beschrieben.

Bei bekannten Ventilbaugruppen mit einem zusätzlichen Belüftungskanal besteht das Problem, daß zur Steuerung der zusätzlichen Luftzufuhr über den Belüftungskanal, die in Abhängigkeit einer Bremspedalbetätigung erfolgen muß, relativ viele und komplizierte Teile erforderlich sind, was hohe Herstellungskosten zur Folge hat. Ventilbaugruppen mit einem zusätzlichen Belüftungskanal sind daher trotz unbestreitbarer Vorzüge bisher nur selten anzutreffen.

Der Erfindung liegt die Aufgabe zugrunde, eine gattungsgemäße Ventilbaugruppe dahingehend weiterzubilden, daß die Ansteuerung des zusätzlichen Belüftungskanals vereinfacht ist, wobei gleichzeitig eine möglichst einfache Montage der Ventilbaugruppe sichergestellt sein soll, um ihre Herstellungskosten insgesamt deutlich senken zu können.

Diese Aufgabe ist ausgehend von einer gattungsgemäßen Ventilbaugruppe erfindungsgemäß dadurch gelöst, daß der zusätzliche Belüftungskanal durch einen das Ventilgehäuse umgebenden Ring gebildet ist, der mit axialem Abstand zur Steuerhülse auf dem Ventilgehäuse angeordnet ist und der einen Hohlraum aufweist, welcher einen mit einer Luftzuführung verbundenen Einlaß und einen in die mit dem Lufteinlaß verbindbare Kammer mündenden Auslaß hat. Der erfindungsgemäße, mit einem Hohlraum versehene Ring, der das Ventilgehäuse in Umfangsrichtung ganz oder auch nur teilweise umgeben kann, läßt sich äußerst einfach montieren, da er nur auf einen halsförmigen Fortsatz des Ventilgehäuses, der in komplett montiertem Zustand aus dem Gehäuse des Bremskraftverstärkers herausragt, aufgeschoben zu werden braucht. Bei bevorzugten Ausführungsbeispielen der erfindungsgemäßen Ventilbaugruppe ist der erfindungsgemäße Ring lediglich durch einen einfachen, auf dem halsförmigen Fortsatz angebrachten Sprengring gegen axiales Verschieben gesichert.

Die erfindungsgemäße Ausbildung des zusätzlichen Belüftungskanals als Ring mit einem Hohlraum ermöglicht ferner die in den Unteransprüchen angegebenen vorteilhaften Abwandlungen und Weiterbildungen der erfindungsgemäßen Ventilbaugruppe.

So ist gemäß einer bevorzugten Ausführungsform der erfindungsgemäßen Ventilbaugruppe der Ring mit einem zumindest im wesentlichen U-förmigen Querschnitt ausgebildet, wobei die offene Stirnseite des Rings den Auslaß seines Hohlraums bildet. Eine solche Ausführungsform ist besonders vorteilhaft, wenn der Auslaß des Hohlraums der Steuerhülse zugekehrt und der dritte Ventilsitz durch eine ringförmig geschlossene Dichtscheibe gebildet ist, die axial schwimmend auf dem Ventilgehäuse zwischen der Steuerhülse und dem Ring angeordnet ist. Der dritte Ventilsitz ist bei dieser Ausführungsform doppeltwirkend: Er dichtet einerseits den Auslaß des Hohlraums des Rings und andererseits gegenüber der Steuerhülse ab. Die axial schwimmende Lagerung der ringförmig geschlossenen doppeltwirkenden Dichtscheibe erlaubt eine einfache Montage und erfordert keinerlei Justierung.

Bei einer abgewandelten, zweckmäßigen Ausführungsform der erfindungsgemäßen Ventilbaugruppe ist das Übertragungsglied mit dem zweiten Ventilsitz fest verbunden und erstreckt sich mit axialem Spiel durch je eine radiale Aussparung des Ventilgehäuses und der Steuerhülse, wobei das axiale Spiel des Übertragungsgliedes gegenüber dem Ventilgehäuse größer als das axiale Spiel des Übertragungsgliedes gegenüber der Steuerhülse ist. Diese Art der mechanischen Kopplung von zweitem und drittem Ventilsitz ermöglicht auf einfache Weise eine präzise Festlegung des Öffnungsverhaltens des zweiten und des dritten Ventils.

Bei abgewandelten, bevorzugten Ausführungsformen der erfindungsgemäßen Ventilbaugruppe ist der zusätzliche Belüftungskanal über die Luftzuführung an eine Druckluftquelle angeschlossen. Bei solchen Ausführungsformen öffnet das zusätzliche, dritte Ventil erst dann, wenn der Bremskraftverstärker seinen Aussteuerpunkt erreicht hat, d.h. wenn die bewegliche Wand zwischen der Unterdruck- und der Arbeitskammer des Bremskraftverstärkers - eine normale Betätigung der Bremsanlage vorausgesetzt - soweit wie möglich in eine den angeschlossenen Hauptbremszylinder betätigende Richtung verschoben worden ist und sich der maximale Differenzdruck zwischen der Unterdruckkammer und der Arbeitskammer eingestellt hat. Wird die Ventilbaugruppe in diesem Zustand weiterhin betätigt, in aller Regel durch ein fortdauerndes Betätigen des Bremspedals, so öffnet sich das dritte Ventil und Druckluft strömt durch den zusätzlichen Belüftungskanal in die Arbeitskammer des Bremskraftverstärkers, wodurch die Ausgangskraft desselben erhöht wird und die an den Hauptbremszylinder angeschlossenen Bremsen des Fahrzeugs entsprechend stärker betätigt werden. Bei einer plötzlichen Betätigung des Bremspedals, etwa im Falle einer Notbremsung, öffnet das dritte Ventil den zusätzlichen Belüftungskanal jedoch vor dem Erreichen des Aussteuerpunktes des Bremskraftverstärkers, so daß durch einen möglichst schnellen Druckaufbau in der Arbeitskammer des Bremskraftverstärkers die Ansprechzeit der Bremsanlage minimiert ist und möglichst früh ein hoher Bremsdruck zur Verfügung steht.

Ist der zusätzliche Belüftungskanal mit einer Druckluftquelle verbunden, so hat eine erst nach dem Erreichen des Aussteuerpunktes des Bremskraftverstärkers erfolgende Öffnung des zusätzlichen, dritten Ventils den weiteren Vorteil, daß der gesamte Bremskraftverstärker trotz guter Verstärkerleistung sehr kompakt gehalten werden kann. Es hat sich nämlich herausgestellt, daß bei der überwiegenden Anzahl aller im normalen Fahrbetrieb auftretenden Bremsungen die maximal mögliche Verstärkerleistung üblicher pneumatischer Bremskraftverstärker bei weitem nicht benötigt wird. Das aber bedeutet, daß in der Mehrzahl aller Fälle ein erheblich kleinerer, d.h. weniger Verstärkungsleistung bietender Bremskraftverstärker ausreichend wäre. Ein solcher kleinerer Bremskraftverstärker würde aufgrund seines weniger voluminösen Gehäuses erheblich weniger Einbauraum beanspruchen, was insbesondere im Hinblick auf die bei modernen Fahrzeugen oft vorherrschende Enge im Motorraum erstrebenswert ist, die sich bei kompakten Fahrzeugen oder auch bei mit vielen Sonderausstattungen versehenen Fahrzeugen aufgrund der gedrängten Anordnung von Aggregaten im Motorraum ergibt. Die erfindungsgemäße Ventilbaugruppe ermöglicht aufgrund ihrer kostengünstigen Herstellbarkeit und durch ihre einfache Montage auf breiter Front den Einsatz von solchen kleineren pneumatischen Bremskraftverstärkern in Fahrzeugen, wobei die im Falle einer Notbremsung erforderliche zusätzliche Energie durch die Druckluft bereitgestellt wird, die durch den vom dritten Ventil gesteuerten zusätzlichen Belüftungskanal in die Arbeitskammer des Bremskraftverstärkers eingespeist wird. Die überwiegende Anzahl der im täglichen Fahrbetrieb auftretenden "Normalbremsungen" findet dagegen energiesparend ohne die Druckluftunterstützung statt.

Unabhängig davon, ob der zusätzliche Belüftungskanal der erfindungsgemäßen Ventilbaugruppe an eine Druckluftquelle angeschlossen ist oder nur mit Umgebungsluftdruck in Verbindung steht, ist das den zusätzlichen Belüftungskanal steuernde dritte Ventil so angeordnet, daß es sich bei einem fertig montierten Bremskraftverstärker innerhalb eines Gehäuses desselben befindet.

Die verschiedenen Ausführungsformen der erfindungsgemäßen Ventilbaugruppe gestatten eine Montage des dritten Ventilsitzes, ohne daß das Ventilgehäuse gegenüber herkömmlichen Ventilbaugruppen verändert werden müßte. Die erfindungsgemäße Ventilbaugruppe integriert sich damit vorteilhaft in bestehende Fertigungslinien.

Ein Ausführungsbeispiel einer erfindungsgemäßen Ventilbaugruppe wird im folgenden anhand schematischer Zeichnungen näher erläutert.
Es zeigt:
- Fig. 1: eine mit dem Gehäuse eines Bremskraftverstärkers verbundene erfindungsgemäße Ventilbaugruppe im Längsschnitt, und
- Fig. 2: den Ausschnitt X aus Figur 1 in vergrößerter Darstellung.

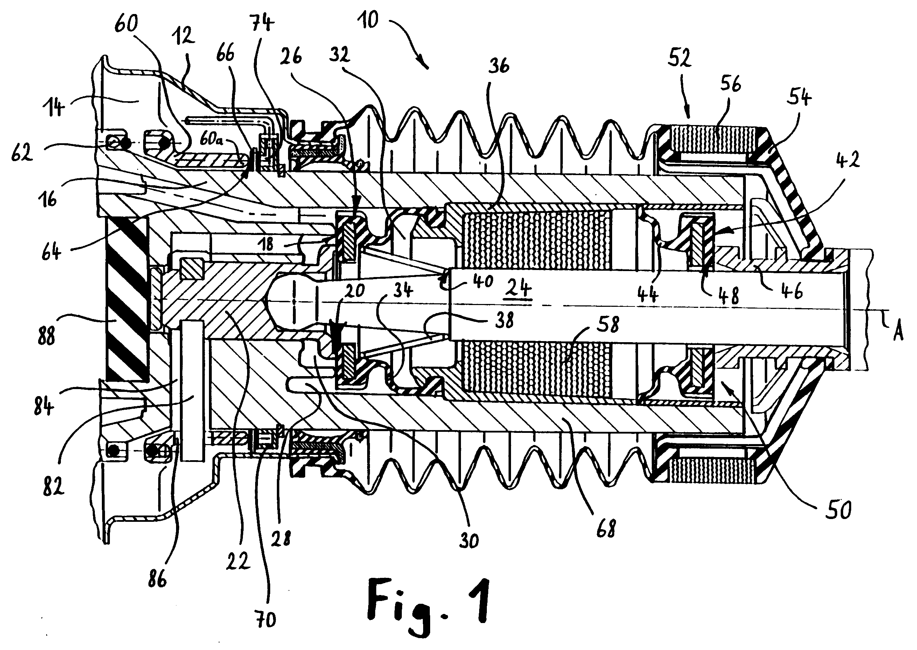

In Fig. 1 ist eine allgemein mit 10 bezeichnete Ventilbaugruppe zum Steuern eines pneumatischen Bremskraftverstärkers dargestellt, von dem in Fig. 1 nur ein kleiner Teil seines Gehäuses 12 gezeigt ist. Im Gehäuse 12 des Bremskraftverstärkers ist in üblicher Weise eine bewegliche Wand (nicht dargestellt) angeordnet, die beispielsweise aus einer elastischen Membran und einer starren Stützplatte gebildet sein kann und die zwei Kammern voneinander trennt, von denen die in üblicher Einbaulage des Bremskraftverstärkers vordere Kammer ständig mit einer Unterdruckquelle, beispielsweise mit der Saugleitung eines Ottomotors verbunden ist und die deshalb auch als Unterdruckkammer bezeichnet wird. Die andere, bezüglich der üblichen Einbaulage hintere Kammer ist durch die Ventilbaugruppe 10 wahlweise mit der vorderen Kammer oder mit einem Umgebungslufteinlaß verbindbar. Die hintere Kammer wird auch als Arbeitskammer bezeichnet und ist in den Figuren mit dem Bezugszeichen 14 versehen.

Die Ventilbaugruppe 10 hat ein rohrförmiges Ventilgehäuse 16, das bezüglich einer Achse A im wesentlichen rotationssymmetrisch gestaltet ist und mit der hier nicht gezeigten beweglichen Wand fest und dicht verbunden ist. Im Ventilgehäuse 16 ist ein ringförmiger erster Ventilsitz 18 ausgebildet. Ein zweiter, ebenfalls ringförmiger Ventilsitz 20 kleineren Durchmessers ist gleichachsig mit dem ersten Ventilsitz an einem Stößel 22 ausgebildet, der mittels eines Betätigungsgliedes 24 längs der Achse A verstellbar ist. Das Betätigungsglied 24 ist in üblicher Weise mit dem Bremspedal eines Fahrzeugs verbindbar.

Beiden Ventilsitzen 18 und 20 ist ein gemeinsamer Ventilkörper 26 zugeordnet, der zusammen mit dem ersten Ventilsitz 18 einen radial äußeren Ringraum 28 innerhalb des Ventilgehäuses 16 von einem ringförmigen Zwischenraum 30 zwischen den beiden Ventilsitzen 18 und 20 trennen kann und der zusammen mit dem zweiten Ventilsitz 20 einen Innenraum 32 vom Zwischenraum 30 trennen kann. Der radial äußere Ringraum 28 ist an die Unterdruckkammer (nicht gezeigt) angeschlossen, während der ringförmige Zwischenraum 30 an die Arbeitskammer 14 angeschlossen ist. Der Ventilkörper 26 ist durch eine Manschette 34 aus Gummi oder aus einem Elastomeren mit einer Stützhülse 36 verbunden, die in das Ventilgehäuse 16 dicht und fest eingebaut ist. Durch eine Kegelfeder 38, die sich an einer Schulter 40 des Betätigungsgliedes 24 abstützt, ist der Ventilkörper 26 in Richtung auf die beiden Ventilsitze 18 und 20 vorgespannt.

Ein zweiter Ventilkörper 42 ist dem freien Ende des Ventilgehäuses 16 benachbart spiegelbildlich zum ersten Ventilkörper 26 um das Betätigungsglied 24 herum angeordnet. Der dem ersten Ventilkörper 26 vom Aufbau her ähnelnde zweite Ventilkörper 42 ist mit einer Manschette 44 in der Stützhülse 36 dicht eingespannt und bildet zusammen mit einer auf dem Betätigungsglied 24 unverrückbar angeordneten Hülse 46, an der ein Ventilsitz 48 ausgebildet ist, ein Rückschlagventil 50. Ein Umgebungslufteinlaß 52, der sich in Umfangsrichtung erstreckend in einer auf das freie Ende des Ventilgehäuses 16 zur Abdichtung desselben aufgeschobenen Endkappe 54 aus Gummi oder aus einem Elastomermaterial angeordnet ist, steht über einen ersten, in der Endkappe 54 angeordneten Filter 56, das Rückschlagventil 50 und einen zweiten, innerhalb der Stützhülse 36 angeordneten Filter 58 mit dem Innenraum 32 in Verbindung.

Im Bereich seines der nicht dargestellten beweglichen Wand zugekehrten Endes wird das Ventilgehäuse 16 konzentrisch von einer Steuerhülse 60 umgeben, die axial verschieblich und von einer Schraubenfeder 62 in Richtung auf einen zusätzlichen, dritten Ventilsitz 64 vorgespannt ist, der durch eine beidseitig mit einem elastischen Material versehene Dichtscheibe 66 gebildet ist. Die Steuerhülse 60 bildet demnach mit ihrem in den Figuren rechten Ende 60a einen zusätzlichen, normalerweise gegen den dritten Ventilsitz 64 abdichtenden Ventilkörper.

Die Dichtscheibe 66 ist lediglich auf einen halsförmigen Fortsatz 68 des Ventilgehäuses 16 aufgeschoben und von diesem geführt. Die federnd zur Dichtscheibe 66 hin vorgespannte Steuerhülse 60 drückt die schwimmend auf dem halsförmigen Fortsatz 68 angeordnete Dichtscheibe 66 mit ihrer vom Ende 60a der Steuerhülse 60 abgekehrten Stirnfläche gegen einen das Ventilgehäuse 16 bzw. dessen halsförmigen Fortsatz 68 umgebenden Ring 70, der einen U-förmigen Querschnitt hat und durch einen Sprengring 72, welcher in einer Nut auf dem halsförmigen Fortsatz 68 befestigt ist, gegen eine axiale Verschiebung in Richtung auf das freie Ende des Ventilgehäuses 16 gesichert ist.

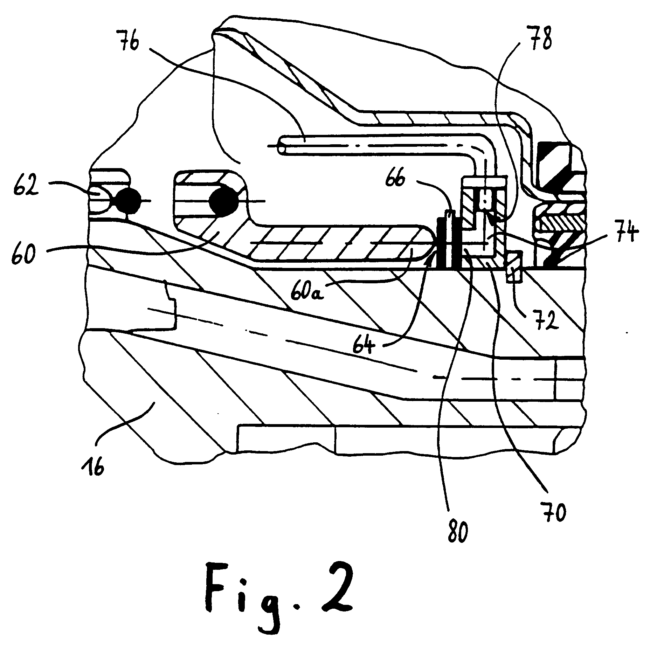

Wie aus Fig. 1 und insbesondere aus Fig. 2 hervorgeht, ist durch den U-förmigen Querschnitt des Rings 70 innerhalb desselben ein Hohlraum 74 gebildet, der einen mit einer Luftzuführung 76 verbundenen Einlaß 78 und einen kreisringförmigen Auslaß 80 aufweist. Der Hohlraum 74 stellt somit einen durch die Luftzuführung 76 gespeisten, zusätzlichen Belüftungskanal dar, dessen Auslaß 80 in die Arbeitskammer 14 mündet und dem Ende 60a der Steuerhülse 60 direkt gegenüberliegt, so daß er von der doppeltwirkenden Dichtscheibe 66 im Zusammenwirken mit der Steuerhülse 60 und der Schraubenfeder 62 federnd verschlossen gehalten wird. Die Luftzuführung 76 ist beim beschriebenen Ausführungsbeispiel an eine geeignete Druckluftquelle (nicht gezeigt) angeschlossen, beispielsweise an einen Druckluftbehälter. Wie ebenfalls aus Fig. 1 ersichtlich ist, sind die Steuerhülse 60, die doppeltwirkende Dichtscheibe 66 und der Ring 70 mit seiner Luftzuführung 76 noch innerhalb des Bremskraftverstärkergehäuses 12 und somit schmutzgeschützt angeordnet.

Der Stößel 22, an dem der zweite Ventilsitz 20 ausgebildet ist, hat eine Ringnut, in die ein etwa haarnadelförmiges Übertragungsglied 82 fest und spielfrei eingerastet ist. Vom Stößel 22 erstreckt sich das Übertragungsglied 82 radial durch eine Aussparung 84 im Ventilgehäuse 16 und eine Aussparung 86 in der Steuerhülse 60 hindurch. Das Übertragungsglied 82 hat in der Aussparung 84 und 86 je ein axiales Spiel, wobei das Spiel in der Aussparung 84 größer als das Spiel in der Aussparung 86 ist.

Im dem Bremskraftverstärkergehäuse 12 zugekehrten Ende des Ventilgehäuses 16 ist ein auch als Reaktionsscheibe bezeichneter Elastomerkörper 88 angeordnet, der in Umfangsrichtung vom Ventilgehäuse 16 umschlossen ist und der einen Kraftübersetzer zwischen dem Betätigungsglied 24 und einem sich axial an den Elastomerkörper 88 anschließenden, hier nicht dargestellten Kraftabgabeglied bildet. Eine ebenfalls nicht dargestellte, im Bremskraftverstärkergehäuse 12 angeordnete Rückstellfeder spannt in üblicher Weise die bewegliche Wand zwischen der Unterdruckkammer und der Arbeitskammer 14 sowie das Ventilgehäuse 16 nach hinten, d.h. in Fig. 1 nach rechts vor.

Im folgenden wird die Funktionsweise der Ventilbaugruppe 10 erläutert:

Solange in der Unterdruckkammer des Bremskraftverstärkers noch kein Unterdruck vorhanden ist, weil beispielsweise der Motor des zugehörigen Kraftfahrzeugs noch nicht läuft, liegt der Ventilkörper 26, bedingt durch den Anschlag des Übertragungsgliedes 82 am Verstärkergehäuse 12, am ersten Ventilsitz 18, nicht jedoch am zweiten Ventilsitz 20 an, und der durch den Hohlraum 74 gebildete zusätzliche Belüftungskanal ist aufgrund des über die Steuerhülse 60 auf die Dichtscheibe 66 ausgeübten Drucks von letzterer verschlossen. Die Arbeitskammer 14 ist somit über den Innenraum 32 des Ventilgehäuses 16 mit dem Umgebungslufteinlaß 52 verbunden, während die Verbindung zwischen der Unterdruckkammer und der Arbeitskammer 14 unterbrochen ist.

Wird nun der Motor des erwähnten Kraftfahrzeugs in Betrieb gesetzt, entsteht in der Unterdruckkammer ein Unterdruck und die die Unterdruckkammer und die Arbeitskammer 14 voneinander trennende bewegliche Wand wird zusammen mit dem Ventilgehäuse 16 gegen den anfangs geringen Widerstand der im Bremskraftverstärkergehäuse 12 angeordneten Rückstellfeder um ein kleines Stück vorwärtsbewegt, d.h. in Fig. 1 nach links, während das Betätigungsglied 24 und der Stößel 22 ihre Ruhelage beibehalten. Der erste Ventilkörper 26, der bisher nur am ersten Ventilsitz 18 anlag, legt sich infolgedessen leicht an den zweiten Ventilsitz 20 an und es stellt sich der in Fig. 1 wiedergegebene Gleichgewichtszustand ein, in dem die Unterdruckkammer in dem von der Vakuumquelle bestimmten Ausmaß evakuiert ist, und in dem in der Arbeitskammer 14 ein Druck herrscht, der etwas größer als der Druck in der Unterdruckkammer, jedoch deutlich geringer als der Atmosphärendruck ist. Der Bremskraftverstärker ist nun betriebsbereit und kann ohne weitere Verzögerung einen mit ihm verbundenen, hier nicht dargestellten Hauptbremszylinder betätigen.

Wird jetzt ein mit dem Betätigungsglied 24 verbundenes Bremspedal auf normale Weise betätigt, so wird das Betätigungsglied 24 bezogen auf Fig. 1 um ein kleines Stück nach links verschoben und der zweite Ventilsitz 20 trennt sich vom ersten Ventilkörper 26. Dieser liegt nun mit der vollen Kraft der Kegelfeder 38 ausschließlich am ersten Ventilsitz 18 an und trennt auf diese Weise die Unterdruckkammer vollständig von der Arbeitskammer 14, während gleichzeitig durch den ersten Filter 56 einströmende Umgebungsluft durch das nunmehr aufgrund des vorhandenen Druckgradienten offene Rückschlagventil 50 und den zweiten Filter 58 über den Innenraum 32 und den ringförmigen Zwischenraum 30 in die Arbeitskammer 14 gelangt und die hier nicht dargestellte bewegliche Wand samt dem Ventilgehäuse 16 und dem ebenfalls nicht dargestellten Kraftabgabeglied vorwärtsschiebt, so daß der angeschlossene Hauptbremszylinder betätigt wird. Der Auslaß 80 des zusätzlichen Belüftungskanals wird nach wie vor von der Dichtscheibe 66 verschlossen gehalten. Eine fortgesetzte Betätigung des Bremspedals vorausgesetzt, hält der beschriebene Zustand an, bis in der Arbeitskammer 14 der Umgebungsdruck erreicht ist und sich somit die ohne Druckluftunterstützung maximal mögliche Druckdifferenz zwischen der Unterdruckkammer und der Arbeitskammer eingestellt hat. Der Bremskraftverstärker ist damit ausgesteuert.

Wird nun ausgehend vom soeben beschriebenen Zustand das Bremspedal und somit das Betätigungsglied 24 mit erhöhter Kraft betätigt, so kann sich das Ventilgehäuse 16 axial nicht mehr weiter in Richtung auf den angeschlossenen Hauptbremszylinder, d.h. in Fig. 1 nach links, bewegen und es kommt zu einer Relativbewegung zwischen dem Stößel 22 und dem Ventilgehäuse 16, so daß daß das Übertragungsglied 82 gegen den vorderen, in Fig. 1 linken Rand der Aussparung 86 in der Steuerhülse 60 stößt und diese mitnimmt, wodurch der zusätzliche, dritte Ventilsitz 64 entlastet wird. Die durch die Luftzuführung 76 in den Hohlraum 74 des Rings 70 eingespeiste Druckluft verschiebt die schwimmend angeordnete Dichtscheibe 66 bezüglich Fig. 1 axial nach links, so daß der Auslaß 80 des durch den Hohlraum 74 gebildeten zusätzlichen Belüftungskanals freigegeben wird und Druckluft in die Arbeitskammer 14 strömen kann. Diese in die Arbeitskammer 14 einströmende Druckluft erhöht nun entsprechend dem zur Verfügung stehenden Druckniveau die Leistungsfähigkeit, d.h. das Verstärkungsverhältnis des Bremskraftverstärkers. Der zweite Ventilkörper 42 des Rückschlagventils 50 wird dabei umso fester gegen seinen Ventilsitz 48 gepreßt, je höher der sich in der Arbeitskammer aufbauende Überdruck ist. Ein Entweichen des Überdrucks aus der Arbeitskammer 14 am offenen zweiten Ventilsitz 20 vorbei in die Umgebung wird somit durch das Rückschlagventil 50 verhindert.

Sobald das Bremspedal freigegeben wird, drückt die federnd vorgespannte Steuerhülse 60 die Dichtscheibe 66 wieder gegen den Auslaß 80 des zusätzlichen Belüftungskanals und verschließt diesen. Ferner legt sich der erste Ventilkörper 26 dicht an den zweiten Ventilsitz 20 an, während der erste Ventilsitz 18 vom Ventilkörper 26 abgehoben ist, so daß die Arbeitskammer 14 vom Umgebungslufteinlaß 52 getrennt und mit der Unterdruckkammer verbunden ist, woraufhin ein Druckausgleich zwischen der Unterdruckkammer und der Arbeitskammer 14 stattfindet und die beweglichen Bauteile in ihre in Fig. 1 gezeigte Gleichgewichtsstellung zurückkehren.

Aus der vorstehenden Beschreibung der Funktionsweise ergibt sich, daß bei einer normalen Bremsbetätigung die Druckluftzufuhr in die Arbeitskammer 14 erst erfolgt, nachdem der Aussteuerpunkt des Bremskraftverstärkers erreicht worden ist. Wird jedoch das Bremspedal bereits zu Beginn einer Bremsung heftig durchgetreten, wie es etwa bei einer Notbremsung der Fall ist, so gerät das Übertragungsglied 82 bereits vor dem Erreichen des Aussteuerpunktes in Kontakt mit dem vorderen Rand der Aussparung 86, so daß analog zur obenstehend beschriebenen Funktionsweise Druckluft aus dem zusätzlichen Belüftungskanal bereits zu einem frühen Zeitpunkt in die Arbeitskammer 14 strömt, wodurch die bei einer Notbremsung an den Bremsorganen erwünschten hohen Zuspannkräfte frühzeitig zur Verfügung stehen.

## Patentansprüche

1. Ventilbaugruppe (10) zum Steuern eines pneumatischen Bremskraftverstärkers, mit
- einem Ventilgehäuse (16), in dem ein erster und ein zweiter Ventilsitz (18, 20) angeordnet sind,
- einem an beide Ventilsitze (18, 20) anlegbaren Ventilkörper (26), der
-- in einer Stellung eines Betätigungsgliedes (24) nur vom ersten Ventilsitz (18) abgehoben ist, wodurch zwei Kammern des Bremskraftverstärkers miteinander verbunden und beide von einem Lufteinlaß (52) getrennt sind, und
-- in einer anderen Stellung des Betätigungsgliedes (24) vom zweiten Ventilsitz (20) abgehoben ist, wodurch die beiden Kammern voneinander getrennt sind und eine (14) von ihnen mit dem Lufteinlaß (52) verbunden ist, und
- einem zusätzlichen Belüftungskanal, der in die mit dem Lufteinlaß (52) verbindbare Kammer (14) des Bremskraftverstärkers mündet und von einem zusätzlichen Ventil (60a, 64) gesteuert ist, das durch einen radial außerhalb des Ventilgehäuses (16) angeordneten ringförmigen dritten Ventilsitz (64) und eine das Ventilgehäuse umgebende Steuerhülse (60) gebildet ist, die als zusätzlicher Ventilkörper gegenüber dem Ventilgehäuse (16) axial verschiebbar und in Richtung auf den dritten Ventilsitz (64) hin vorgespannt ist, wobei das Betätigungsglied (24) mit der Steuerhülse (60) durch ein Übertragungsglied (82) so verbunden ist, daß das zusätzliche Ventil (60a, 64) durch eine Bewegung des Betätigungsgliedes (24) zu öffnen ist, welche über die zum Abheben des Ventilkörpers (26) vom zweiten Ventilsitz (20) erforderliche Bewegung hinausgeht,
dadurch gekennzeichnet, daß
der zusätzliche Belüftungskanal durch einen das Ventilgehäuse (16) zumindest teilweise umgebenden Ring (70) gebildet ist, der mit axialem Abstand zur Steuerhülse (60) auf dem Ventilgehäuse (16) angeordnet ist und einen Hohlraum (74) aufweist, welcher einen mit einer Luftzuführung (76) verbundenen Einlaß (78) und einen in die mit dem Lufteinlaß (52) verbindbare Kammer (14) mündenden Auslaß (80) hat.

2. Ventilbaugruppe nach Anspruch 1,
dadurch gekennzeichnet, daß der Ring (70) einen zumindest im wesentlichen U-förmigen Querschnitt aufweist, wobei die offene Stirnseite des Rings (70) den Auslaß (80) seines Hohlraumes (74) bildet.

3. Ventilbaugruppe nach Anspruch 1 oder 2,
dadurch gekennzeichnet, daß der Auslaß (80) des Hohlraumes (74) der Steuerhülse (60) zugekehrt und der dritte Ventilsitz (64) eine ringförmig geschlossene, doppeltwirkende Dichtscheibe (66) ist, die axial schwimmend auf dem Ventilgehäuse (16) zwischen der Steuerhülse (60) und dem Ring (70) angeordnet ist.

4. Ventilbaugruppe nach einem der Ansprüche 1 bis 3,
dadurch gekennzeichnet, daß der Ring (70) durch einen Sprengring (72) gegen axiales Verschieben gesichert ist.

5. Ventilbaugruppe nach einem der Ansprüche 1 bis 4,
dadurch gekennzeichnet, daß das Übertragungsglied (82) mit dem zweiten Ventilsitz (20) fest verbunden ist und sich mit axialem Spiel durch je eine radiale Aussparung (84, 86) des Ventilgehäues (16) und der Steuerhülse (60) erstreckt, wobei das axiale Spiel des Übertragungsgliedes (82) gegenüber dem Ventilgehäuse (16) größer als das axiale Spiel des Übertragungsgliedes (82) gegenüber der Steuerhülse (60) ist.

6. Ventilbaugruppe nach einem der Ansprüche 1 bis 5,
dadurch gekennzeichnet, daß der zusätzliche Belüftungskanal über die Luftzuführung (76) an eine Druckluftquelle angeschlossen ist.

7. Ventilbaugruppe nach einem der vorhergehenden Ansprüche,
dadurch gekennzeichnet, daß das zusätzliche Ventil (60a, 64) innerhalb eines Gehäuses (12) des Bremskraftverstärkers angeordnet ist.

## Claims

1. A valve assembly (10) for controlling a pneumatic brake booster, comprising
- a valve housing (16) in which a first and a second valve seat (18, 20) are disposed;
- a valve body (26) adapted to be applied to both valve seats (18, 20), which valve body
-- in one position of an operating member (24) is lifted off the first valve seat (18) only, whereby two chambers of the brake booster are connected with each other and both chambers are isolated from an air inlet (52), and
-- in another position of the operating member (24) is lifted off the second valve seat (20), whereby the two chambers are isolated from each other and one (14) of them is connected with the air inlet (52); and
- an additional venting channel which opens into the chamber (14) of the brake booster adapted to be connected with the air inlet (52) and which is controlled by an additional valve (60a, 64) formed by an annular third valve seat (64) which is disposed radially outside the valve housing (16) and by a control sleeve (60) surrounding the valve housing, which as an additional valve body is adapted to be axially displaced with respect to the valve housing (16) and is biased towards the third valve seat (64), with the operating member (24) being connected with the control sleeve (60) by means of a transmission member (82) in such a manner that the additional valve (60a, 64) can be opened by a movement of the operating member (24) which exceeds the movement required for lifting the valve body (26) off the second valve seat (20),
characterized in that
the additional venting channel is formed by a ring (70) which surrounds the valve housing (16) at least partially, is arranged at an axial distance from the control sleeve (60) on the valve housing (16) and is provided with a hollow space (74) which comprises an inlet (78) connected with an air supply (76) and an outlet (80) which opens into the chamber (14) adapted to be connected with the air inlet (52).

2. The valve assembly according to claim 1,
characterized in that the ring (70) has an at least essentially U-shaped cross-section with the open end face of the ring (70) forming the outlet (80) of its hollow space (74).

3. The valve assembly according to Claim 1 or 2,
characterized in that the outlet (80) of the hollow space (74) faces the control sleeve (60) and the third valve seat (64) is an annular closed, double-acting sealing disk (66) which is arranged in an axially floating manner on the valve housing (16) between the control sleeve (60) and the ring (70).

4. The valve assembly according to one of Claims 1 to 3,
characterized in that the ring (70) is secured against axial displacement by means of a circlip (72).

5. The valve assembly according to one of Claims 1 to 4,
characterized in that the transmission member (82) is securely connected with the second valve seat (20) and extends under an axial clearance through one radial recess (84, 86) each of the valve housing (16) and the control sleeve (60), with the axial clearance of the transmission member (82) with respect to the valve housing (16) being larger than the axial clearance of the transmission member (82) with respect to the control sleeve (60).

6. The valve assembly according to one of Claims 1 to 5,
characterized in that the additional venting channel is connected with a compressed air source via the air supply (76).

7. The valve assembly according to one of the preceding claims, characterized in that the additional valve (60a, 64) is arranged within a housing (12) of the brake booster.

## Revendications

1. Bloc de soupapes (10) pour piloter un servofrein pneumatique, comprenant
- un boîtier de soupape (16) dans lequel sont disposés un premier et un deuxième sièges de soupapes (18, 20),
- un corps de soupape (26) pouvant s'appliquer sur les deux sièges de soupapes (18, 20) qui
-- dans une position d'un organe d'actionnement (24) n'est soulevé que du premier siège de soupape (18), ce qui a pour effet de relier entre elles deux chambres du servofrein et de les séparer toutes les deux d'une admission d'air (52), et
-- dans une autre position de l'organe d'actionnement (24) est soulevé du deuxième siège de soupape (20), ce qui a pour effet d'isoler l'une de l'autre les deux chambres et de relier l'une d'entre elles à l'admission d'air (52), et
- un canal d'aération supplémentaire qui débouche dans la chambre (14) du servofrein pouvant être reliée à l'admission d'air (52) et qui est commandé par une soupape supplémentaire (60a, 64) qui est formée d'un troisième siège de soupape (64) annulaire disposé radialement à l'extérieur du boîtier de soupape (16) et d'un manchon de commande (60), entourant le boîtier de soupape, qui peut coulisser, pour faire office de corps de soupape supplémentaire, axialement par rapport au boîtier de soupape (16) et est poussé en permanence en direction du troisième siège de soupape (64), l'organe d'actionnement (24) étant relié au manchon de commande (60) par un organe de transmission (82) de telle façon que la soupape supplémentaire (60a, 64) soit ouverte par un mouvement de l'organe d'actionnement (24) qui va au delà du mouvement nécessaire pour soulever le corps de soupape (26) du deuxième siège de soupape (20),
caractérisé en ce que
le canal d'aération supplémentaire est formé par une bague (70) entourant au moins partiellement le boîtier de soupape (16), qui est disposée sur le boîtier de soupape (16) avec espacement radial par rapport au manchon de commande (60) et qui présente une cavité (74) qui possède une admission reliée à une arrivée d'air (76) et une sortie (80) débouchant dans la chambre (14) pouvant être reliée à l'admission d'air (52).

2. Bloc de soupapes selon la revendication 1,
caractérisé en ce que la bague (70) présente une section au moins principalement en forme de U, la face frontale ouverte de la bague (70) formant la sortie (80) de sa cavité (74).

3. Bloc de soupapes selon la revendication 1 ou 2,
caractérisé en ce que la sortie (80) de la cavité (74) est adjacente au manchon de commande (60) et le troisième siège de soupape (64) est une rondelle d'étanchéité (66) annulaire fermée, à double effet qui est disposée axialement flottante sur le boîtier de soupape (16) entre le manchon de commande (60) et la bague (70).

4. Bloc de soupapes selon l'une quelconque des revendications 1 à 3,
caractérisé en ce que la bague (70) est empêchée de coulisser axialement par un jonc (72).

5. Bloc de soupapes selon l'une quelconque des revendications 1 à 4,
caractérisé en ce que l'organe de transmission (82) est relié de façon fixe au deuxième siège de soupape (20) et s'étend avec jeu axial à travers des évidements (84, 86) pratiqués respectivement dans le boitier de soupape (16) et le manchon de commande (60), le jeu axial de l'organe de transmission (82) par rapport au boîtier de soupape (16) étant plus grand que le jeu axial de l'organe de transmission (82) par rapport au manchon de commande (60).

6. Bloc de soupapes selon l'une quelconque des revendications 1 à 5,
caractérisé en ce que le canal d'aération supplémentaire est relié à une source d'air sous pression par l'arrivée d'air (76).

7. Bloc de soupapes selon l'une quelconque des revendications précédentes,
caractérisé en ce que la soupape supplémentaire (60a, 64) est disposée à l'intérieur d'un boîtier (12) du servofrein.
